# EUROPEAN PATENT SPECIFICATION

(11) **EP 2 398 353 B1**
(45) Date of publication and mention of the grant of the patent: **05.06.2013**
(21) Application number: 10709021.9
(22) Date of filing: 22.02.2010
(51) Int. Cl.: A61G 5/10, F16B 12/40, A47B 95/00

(54) **MOUNTING SYSTEM FOR FURNITURE**
MONTAGESYSTEM FÜR MÖBEL
SYSTÈME DE MONTAGE DE MEUBLE

(30) Priority: 20.02.2009 GB 0902955
(43) Date of publication of application: 28.12.2011
(73) Proprietor: Roma Medical Aids Limited, Bridgend CF31 3TB (GB)
(72) Inventor: PITT, John, Coity Bridgend CF35 6AS (GB)
(74) Representative: Davies, Gregory Mark
(86) International application number: PCT/GB2010/000299
(87) International publication number: WO 2010/094930

(56) References cited:
- DE-A1- 2 317 153
- DE-U1- 29 707 021
- FR-A1- 2 846 071

## Description

The present invention relates to a mounting system and in particular a mounting system suited for use in relation to furniture particularly, to furniture frame structures for use in health care applications.

Reference to furniture is intended to cover stationary furniture and also mobile furniture such as wheelchairs, walking aids and the like. Hospital or nursing home chairs, wheel chairs, commodes and other medical or health care related aids are often constructed from frame-like structures comprising a plurality of frame elements. These frame elements are typically hollow tubes which are arranged and configured to interconnect. It is often also desirable to be able to disconnect currently connected frame elements from the rest of the frame or introduce new frame elements to the existing system. For example, a user may wish to connect an arm rest to, or disconnect an arm rest from, the body of a wheel chair. Wheel chairs are typically constructed from tubular steel frames. A wheel chair arm rest typically comprises an inverted U-shaped tube having a padded cushion on the top of the rest and two downwardly extending arm portions or limbs. Walking aids, commodes and other mobility or health related products are also commonly constructed using tubular frame elements which may need to be temporarily connected to other frame elements.

Thus, a mounting system facilitating the association of previously independent furniture elements such as frame elements has benefit and utility. A commonly utilised mounting system comprises a simple socket joint in which a tubular frame element is received in a closed cup connection socket. Known furniture mounting systems are disclosed in DE2317153A1 and DE29707021U1.

In medical and healthcare applications it is particularly important that hygienic considerations are taken into account. Connection joints in which cleaning can be difficult as dirt and debris can be trapped and accumulate are desirably avoided. Standard socket joints are often relatively small and narrow, and can prove difficult to access and remove the dirt. This is of particular concern in environments which require high standards of hygiene or sterilisation, such as hospitals and care homes.

An improved mounting system has now been devised.

According to the present invention there is provided a mounting system for furniture, the mounting system comprising a mounting body assembly having a first body element and a second body element arranged to be assembled together to form the mounting body assembly; the first body element having attachment means facilitating attachment of the body assembly to a furniture element; wherein when the body assembly is in an assembled configuration the second body element masks the attachment means wherein the mounting body includes connection means (5) for connection to a further frame member (4) and the system further includes a locking arrangement for locking the connection with the further frame member (4), the locking arrangement comprising a locking element (11) which is pivotally movable between released and locking positions. Said locking element (11) is biased to the locking position engaging with a connecting frame or a fitment for a connecting frame.

Before assembly the second body element does not mask the attachment means, which are therefore accessible from the region subsequently masked by the second body element when the assembly is assembled.

In a preferred embodiment the attachment means comprises one or more attachment bores through the first body element permitting mechanical fixings to be used to connect the body element to the furniture. The mechanical fixings may comprise bolts or screw fixings. When the body member is assembled the mechanical fixings are masked by the second body element. This has aesthetic benefit an also health and safety benefits as dirt and fluids are less likely to accumulate in the fixings and bores because they are masked.

Typically, in the assembled configuration, the second body element masks the bore(s) at one end.

Beneficially, the first and second body elements are provided with complementary engagement formations enabling assembly in the assembled configuration. The engagement formations preferably enable the body elements to slidably engage with one another to form the assembled configuration.

The mounting body assembly includes connection means for connection to a further frame member. The connection means may comprise a receptacle for receiving a frame member or fitment for connection to a frame member.

In a preferred embodiment the connection means comprises a bore extending through the body assembly from one side to the other. Beneficially the bore is of uniform diameter along its length. This enables the assembly to be used either way up and means that it is not necessary to use left or right handed components to mount on opposed sides of furniture.

The connection means may be provided on the second body element.

The system further includes a locking arrangement for locking the connection with the further frame member. The locking arrangement comprises a releasable locking arrangement. The locking arrangement comprises a locking element which is biased to a locking position intersecting with a receiving bore comprising the connection means.

The locking arrangement comprises a locking element which is biased to a locking position engaging with a connecting frame or a fitment for a connecting frame.

The locking arrangement comprises a locking element which is pivotally movable between released and locking positions.

In certain preferred embodiments the locking arrangement comprises a locking element having an actuatable handle.

According to an alternative embodiment of the invention the connection means comprises a recess for receiving the further furniture element

Preferred features in relation to these aspects may be in line with the preferred features of the first aspect of the invention

These and other aspects of the present invention will be apparent from, and elucidated with reference to, the embodiment described herein.

An embodiment of the present invention will now be described by way of example only and with reference to the accompanying drawings, in which:
Figure 1 shows a mounting system in accordance with a first embodiment of the invention. The figure shows a first frame element housed within a first connection member which is, in turn, connected to a second connection member. The second frame element is not shown.
Figure 2 shows an embodiment according to a second aspect of the invention, and incorporating a locking mechanism.
Figure 3 shows the embodiment of Figure 1 in a dis-assembled form.
Figure 4 shows a first mounting system in accordance with a second aspect of the present invention and configured to receive a locking member such as that illustrated in Figure 8.

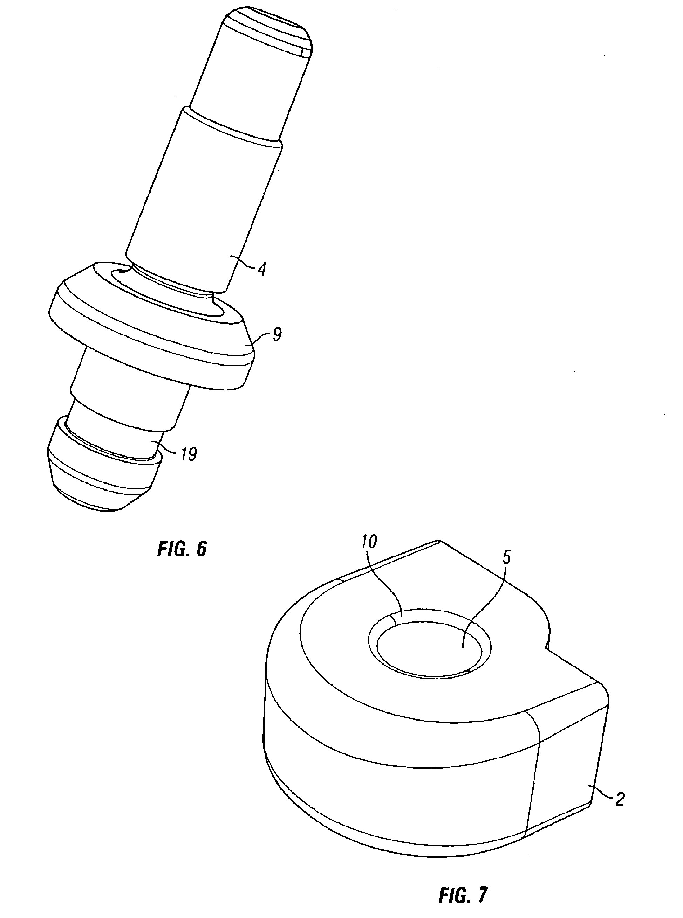

Figures 5 and 6 show alternative views of a first frame element configured for use with an embodiment of the present invention.
Figure 7 shows a first connection member similar to that shown in Figure 4, but without being configured to receive a locking member.
Figure 8 shows a typical locking member for use in accordance with a second aspect of the invention.

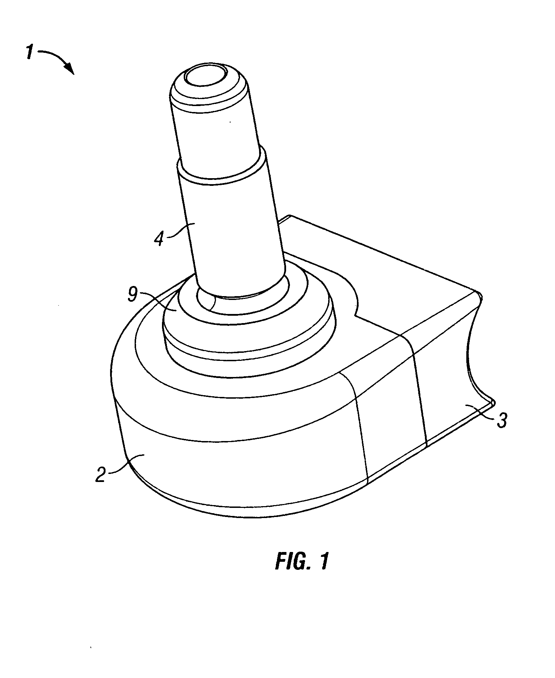

Referring to the drawings and initially to Figure 1, there is shown a furniture mounting system 1 in accordance with a preferred embodiment of the present invention. The mounting system comprises a two part plastic body 20 comprising first and second body elements 2,3 connected to one another. Body element 2 is provided with a bore 5 arranged and configured to receive a fitment 4. Body element 3 is arranged to be secured to the external surface of a tubular frame member (not shown). For this purpose the body element 3 is provided with an arcuate end surface profile corresponding to the surface profile of the tube frame to which the body element 3 is to be mounted.

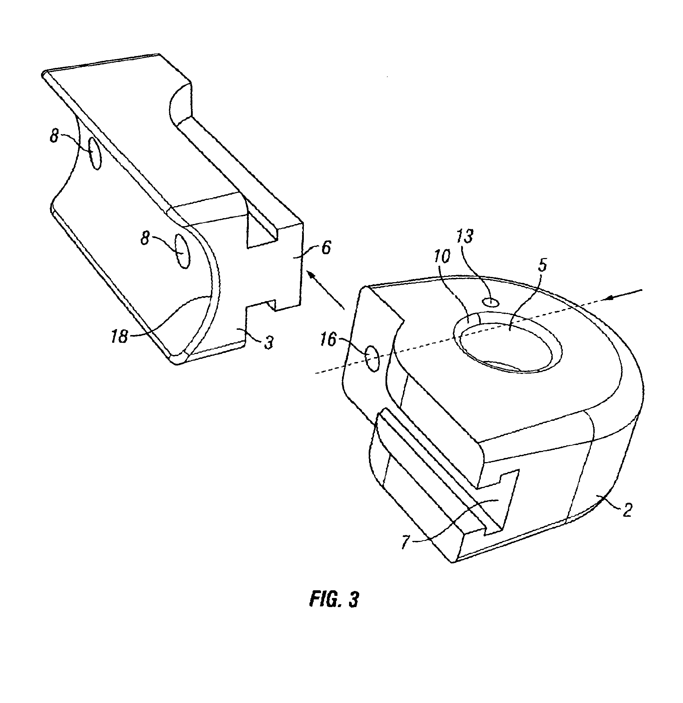

The body elements 2 and 3 are provided with formations arranged to permit the two body elements to engage one another in complementary fashion, in order to be assembled into a unitary body. Body element 3 is provided with a key projection 6, the profile of which is configured to slidingly mate or cooperate with a complementarily shaped channel or guide 7 provided on the body element 2. The projection 6 may be of a T-shaped cross section, and the channel 7 provided on the first connection member may be of a corresponding profile and dimension such that a user can slide the projection 6 into the channel 7 thus providing a coupling between the two connection members. This is most clearly illustrated in Figure 3. It will, however, be appreciated by one skilled in the art that the body elements 2,3 may be connected via alternative mechanisms other than the projection and channel arrangement. For example, snap fit, hook and latch arrangements may be used, or some other coupling engagement.

The body element 3 is provided with bores 8 for receiving fixing screws or bolts for fixing the body element 2 to the frame to which the system is to be mounted. The bores 8 communicate through the body element 2 between an opening on the front arcuate face 18 and an opening on the rear face of the 'T' projection of the body element 3. In mounting the system, the body element 2 is first mounted to the frame element by means of screws fitted through the bores 8, and the body element 2 is then connected to the body element 3 by sliding engagement of the projection 6 into the channel 7 thus providing a coupling between the two connection members. In this way the screw fixings in the bores 8 are masked or covered over by the body element 2. The engagement is a tight push fit in order to inhibit the connection from working loose. The body elements 2, 3 may be held together by a fastening device, such as a screw or bolt, which passes through both elements. This may be performed instead of the sliding connection described above or in addition to it. The fastening device may be inserted into a bore 16 or aperture formed in the first connection member 2 in the direction shown by the dotted line in Figure 3.

In a preferred embodiment, channel 7 is provided on a face of body element 2 which is substantially orthogonal relative to the face upon which the bore 5 is provided. Thus, in use, when the first and second body element 2, 3 are connected, and the second body element 3 attached to the body of the wheel chair, the assembled mounting system 1 is I positioned at substantially right angles to the wheelchair body. Depending on the orientation of the frame element to which the system is mounted, the system 1 may be used in either a substantially vertical or substantially horizontal orientation. The fitment 4 may be mounted to provide a rotary or pivot function being rotatable about its longitudinal axis in the bore 5.

The fitment 4 includes a stem portion 29 which is arranged to be received in the bore 5. A groove 19 is provided to provide cooperation with a locking element in embodiments of the invention where a locking system is provided. The fitment 4 is provided with an abutment member or stop such as a flange 9 which rests against an upper surface of the body element 2 when the stem portion 29 has been inserted into the bore 5. The shaft section 23 of fitment 4 extending away from the flange 9 in the opposite direction to the stem is arranged to be a push fit 'plug' connection into the open end of an appropriately dimensioned open en of a frame element. In this way two frame elements may be connected to one another, one connected to the body element 3 (at the surface 18) and one connected to body element 2 by means of fitment 4 received in the bore 5. In certain embodiments it is envisaged that the fitment 4 may not be required, and that an appropriately shaped and dimensioned frame element could be received directly in the bore 5 of body element 3. A technical advantage offered by the mounting system according to one aspect of the invention is that uniform components can be mounted at opposed sides of a piece of furniture. This means that separate left handed and right handed components do not need to be manufactured. This facility is achieved by means of the connection bore 5 extending completely through the body element 3. A further benefit of this feature is that the system can be easily cleaned (when the fitment 4 is removed from the bore 5). This is not the case with known prior art arrangements having frame elements received in closed cup or socket connections 9 even where provided with fluid drain holes).

It is envisaged that frame elements to be connected by the mounting system are arms or other portions pertaining to a wheelchair, walking aid, commode or other medical/healthcare-related aid. However, it will be understood by a person skilled in the art that the invention can be adapted and configured to connect or mount elements of a variety of frames designed and intended for different usages. The present invention is not intended to be limited in this regard. Use of the invention to connect elements of a wheelchair frame is discussed herein with the sole purpose of facilitating understanding and by way of example only. In this exemplary scenario, the fitment 4 may be inserted into a portion of a wheel chair arm rest, whilst the second frame element (not shown in the Figures) may be the body of the wheelchair. The first and/or second frame elements may be circular in cross section, but not necessarily so.

In accordance with a second aspect of the invention, a locking mechanism may be provided to hold the first frame element 4 in a relatively more secure grip following insertion into the cavity 5.

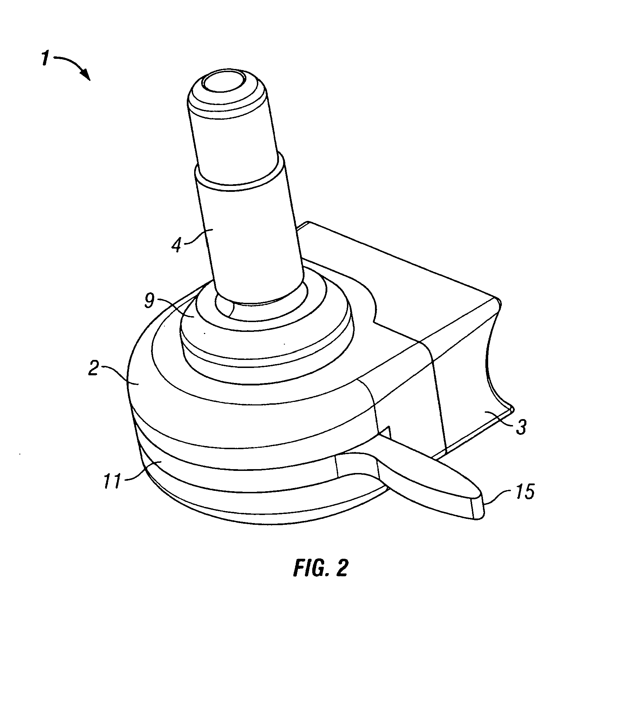

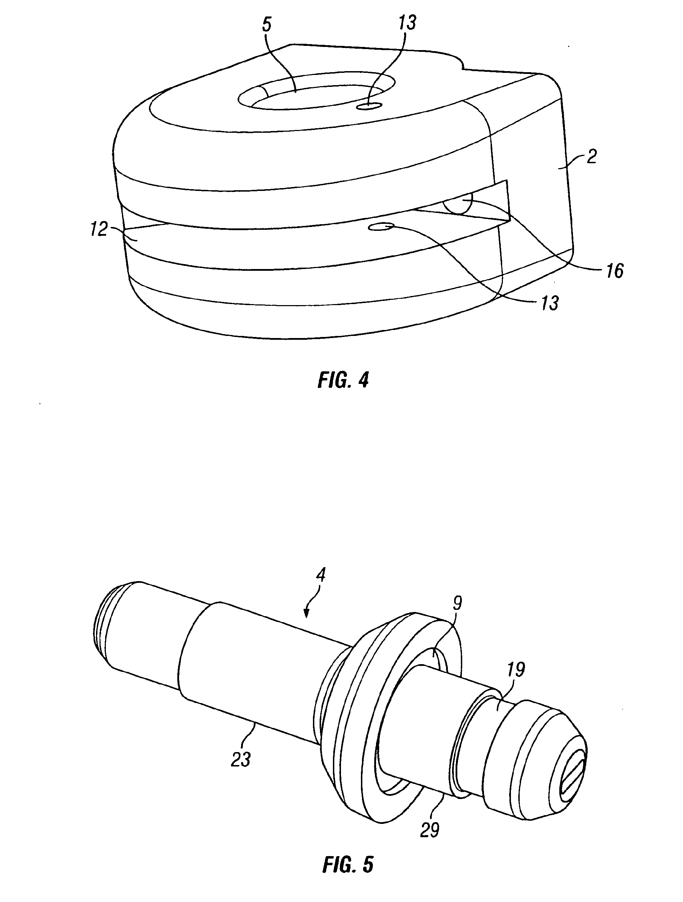

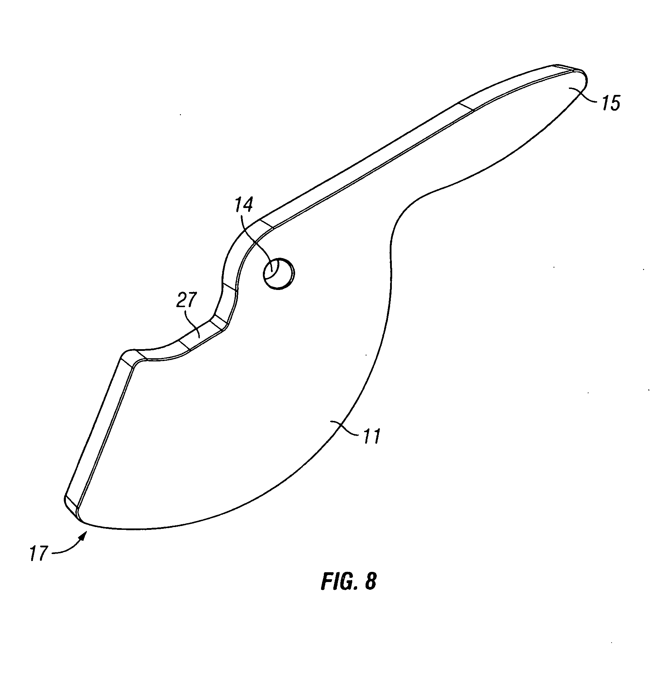

In certain embodiments it is desired to secure the connection between the fitment 4 and the bore 5. A variety of locking mechanisms may used to secure the fitment 4 in position in the bore 5. An embodiment to achieve a releasable locking connection is shown in Figure 8. In this embodiment, a blade-like member or spigot lock 11 is pivotally mounted within a recess or cavity 12 formed in the body element 2, as most clearly shown in Figures 2 and 4. The locking member 11 may be held in position by a pivot pin or anchor (not shown) which passes through the first connection member 2 and the lock 11, whilst allowing the locking member 11 to pivot around the pin. The pin may pass through the body element 2 by means of one or more apertures formed in the body element 3 and an aperture formed in the locking member 14. It is preferred that the locking member 11 is provided with a handle extension15 for ease of use.

The locking member 11 preferably has a notched, indented or curved section 27 on one or more faces to facilitate engagement with the fitment 4 when in use. To facilitate locking and to prevent inadvertent release, the first frame member 4 may be provided with a groove 19, recess or notch configured to receive the locking member. However, a person skilled in the art will appreciate that a variety of locking mechanisms can be employed to hold the first frame element 4 in situ within the body element 2, such as a catch and hook mechanism or any number of alternatives.

The fitment 4 may be provided with more than one recess or groove or aperture 19 along its length to provide locking of fitment 4 in a variety of positions or depths.

The locking member 11 may be resiliently biased towards the engagement position with the fitment 4 by means of a retained spring arrangement (not shown) such that in the absence of a force acting upon the handle 15, the distal end 17 of the locking member is urged inwardly towards the bore 5. In this manner, the default or neutral position of the locking element 11 is in a locked position (i.e. in engagement with the fitment 4).

Although a pivoting locking arrangement is described above, an alternative embodiment may provide a sliding, rolling or rotational locking mechanism.

If a resilient biased locking mechanism is provided according to a second aspect of the invention, the locking member 11 occludes the cavity, either partially or fully prior to insertion of the fitment 4. Thus, it is necessary for a user to press the handle 15 so as to pivot the locking member 11 about the pivot thus enabling insertion of the fitment 4 into the bore 5 of body element 2. Once the user stops pressing the handle 15, the locking member 11 is urged back towards the locked position, pivoting around the pin in doing so, and engaging the locking member 11 with the locking groove 19 provided on the fitment 4. Thus the fitment 4 is locked within the bore 5 of body element 2.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. In a device claim enumerating several means, several of these means may be embodied by one and the same element. The mere fact that certain measures are recited in mutually different dependent claims does not indicate that a combination of these measures cannot be used to advantage.

## Claims

1. A mounting system (1) for furniture, the mounting system comprising a mounting body assembly having a first body element (3) and a second body element (2) arranged to be assembled together to form the mounting body assembly (2, 3); the first body element (3) having attachment means (8) facilitating attachment of the body assembly to a furniture element; wherein when the body assembly is in an assembled configuration the second body element (2) masks the attachment means (8),
wherein:
the mounting body includes connection means (5) for connection to a further frame member (4); and
the system further includes a locking arrangement for locking the connection with the further frame member (4), the locking arrangement comprising a locking element (11) which is pivotally movable between released and locking positions, the locking element being biased to the locking position engaging with a connecting frame or a fitment for a connecting frame.

2. A mounting system according to claim 1, wherein the connection means (5) comprises a receptacle for receiving a frame member or fitment (4) for connection to a frame member (4).

3. A mounting system according to claim 2, wherein the receptacle comprises a bore (5) extending through the body assembly (2, 3) from one side to the other.

4. A mounting system according to claim 3, wherein the bore (5) is of uniform diameter along its length.

5. A mounting system according to any preceding claim, wherein the connection means (5) is provided on the second body element (2).

6. A mounting system according to any preceding claim, wherein the locking arrangement comprises a releasable locking arrangement; and/or
wherein the locking arrangement comprises a locking element (11) which is biased to a locking position intersecting with a receiving bore (5) comprising the connection means.

7. A mounting system according to any preceding claim wherein the locking arrangement comprises a locking element (11) having an actuatable handle (15).

8. A mounting system according to any preceding claim, wherein the attachment means comprises one or more attachment bores (8) through the first body element (3) permitting mechanical fixings to be used to connect the body element (3) to the furniture.

9. A mounting system according to claim 8, wherein in the assembled configuration, the second body element (2) masks the bore(s) (8) at one end.

10. A mounting system according to any preceding claim, wherein the first (3) and second body elements (2) are provided with complementary engagement formations (6, 7) enabling assembly in the assembled configuration.

11. A mounting system according to claim 10, wherein the engagement formations (6,7) enable the body element (2,3) to slidably engage with one another to the assembled configuration.

12. A mounting system according to claim 3, further comprising a fitment element (4) having a stem portion (29) to be received in the bore (5) and a stop or abutment member (9) to abut against the body member when the stem (29) is inserted into the bore (5) to a maximum extent.

## Patentansprüche

1. Montagesystem (1) für Möbel, und das Montagesystem umfasst eine Montagehauptteilanordnung mit einem ersten Hauptteilelement (3) und einem zweiten Hauptteilelement (2), die zum miteinander Zusammensetzen angeordnet sind, um die Montagehauptteilanordnung (2, 3) zu bilden; das erste Hauptteilelement (3) weist Befestigungsmittel (8) auf, die das Anbringen der Hauptteilanordnung an einem Möbelelement erleichtern; wobei dann, wenn die Hauptteilanordnung sich in einem zusammengesetzten Zustand befindet, das zweite Hauptteilelement (2) die Befestigungsmittel (8) abdeckt,
wobei:
das Montagehauptteil Verbindungsmittel (5) zum Verbinden mit einem weiteren Rahmenelement (4) beinhaltet;
und das System außerdem eine Verriegelungsanordnung zum Verriegeln der Verbindung mit dem weiteren Rahmenelement (4) beinhaltet, die Verriegelungsanordnung ein Verriegelungselement (11) umfasst, das schwenkbar zwischen gelöster und verriegelter Position bewegbar ist, wobei das Verriegelungselement in die verriegelte Position vorgespannt ist, in der es mit einem Verbindungsrahmen oder einer Anpassung für einen Verbindungsrahmen in Eingriff ist.

2. Montagesystem nach Anspruch 1, wobei das Verbindungsmittel (5) eine Aufnahme zum Aufnehmen eines Rahmenelementes oder einer Anpassung (4) zum Verbinden mit einem Rahmenelement (4) umfasst.

3. Montagesystem nach Anspruch 2, wobei die Aufnahme eine Bohrung (5) umfasst, die sich durch die Hauptteilanordnung (2, 3) von einer Seite zur anderen erstreckt.

4. Montagesystem nach Anspruch 3, wobei die Bohrung (5) einen einheitlichen Durchmesser über ihre Länge aufweist.

5. Montagesystem nach einem der vorstehenden Ansprüche, wobei das Verbindungsmittel (5) an dem zweiten Hauptteilelement vorgesehen ist.

6. Montagesystem nach einem der vorstehenden Ansprüche, wobei die Verriegelungsanordnung eine lösbare Verriegelungsanordnung umfasst und/oder wobei die Verriegelungsanordnung ein Verriegelungselement (11) umfasst, das in eine Verriegelungsposition vorgespannt ist, die in eine Aufnahmebohrung eingreift, die das Verbindungselement aufweist.

7. Ein Montagesystem nach einem der vorstehenden Ansprüche, wobei die Verriegelungsanordnung ein Verriegelungselement (5) aufweist, das einen betätigbaren Griff (15) beinhaltet.

8. Ein Montagesystem nach einem der vorstehenden Ansprüche, wobei das Befestigungsmittel ein oder mehrere Befestigungsbohrungen (8) umfasst, die durch das erste Hauptteilelement (3) reichen, was erlaubt, mechanische Befestigungen zu verwenden, um das Hauptteilelement (3) mit dem Möbel zu verbinden.

9. Montagesystem nach Anspruch 8, wobei in dem zusammengebauten Zustand das zweite Hauptteilelement (2) die Bohrung(en) (8) an einem Ende abdeckt.

10. Montagesystem nach einem der vorstehenden Ansprüche, wobei das erste (3) und zweite Hauptteilelement (2) mit komplementären Eingriffsformen (6, 7) versehen ist, die eine Anordnung in dem zusammengesetzten Zustand ermöglichen.

11. Montagesystem nach Anspruch 10, wobei die Eingriffsformen (6, 7) den Hauptteilelementen (2, 3) ermöglichen, verschiebbar in den zusammengesetzten Zustand ineinander zu greifen.

12. Montagesystem nach Anspruch 3, weiter umfassend ein Anpassungselement (5), das einen Schaftabschnitt (29) aufweist, um in der Bohrung (5) aufgenommen zu werden, und ein Stopp- oder Anschlagselement (9) um gegen das Hauptteilelement anzuschlagen, wenn der Schaft (29) in die Bohrung (5) bis zu einem Maximum eingesetzt wird.

## Revendications

1. Système de montage (1) pour meuble, le système de montage comprenant un ensemble de corps de montage comportant un premier élément de corps (3) et un second élément de corps (2) agencés pour être assemblés l'un avec l'autre pour former l'ensemble de corps de montage (2, 3) ; le premier élément de corps (3) comportant un moyen de fixation (8) facilitant la fixation de l'ensemble de corps à un élément de meuble ; dans lequel, lorsque l'ensemble de corps est dans une configuration assemblée, le second élément de corps (2) masque le moyen de fixation (8),
dans lequel :
le corps de montage comprend un moyen de raccordement (5) pour le raccordement à un élément de cadre supplémentaire (4) ; et
le système comprend en outre un agencement de verrouillage pour verrouiller le raccordement avec l'élément de cadre supplémentaire (4), l'agencement de verrouillage comprenant un élément de verrouillage (11) qui est mobile de façon pivotante entre des positions libérée et de verrouillage, l'élément de verrouillage étant sollicité jusqu'à la position de verrouillage entrant en prise avec un cadre de raccordement ou un accessoire pour un cadre de raccordement.

2. Système de montage selon la revendication 1, dans lequel le moyen de raccordement (5) comprend un réceptacle pour recevoir un élément de cadre ou accessoire (4) pour le raccordement à un élément de cadre (4).

3. Système de montage selon la revendication 2, dans lequel le réceptacle comprend un alésage (5) s'étendant à travers l'ensemble de corps (2, 3) d'un côté à l'autre.

4. Système de montage selon la revendication 3, dans lequel l'alésage (5) est de diamètre uniforme sur sa longueur.

5. Système de montage selon une quelconque revendication précédente, dans lequel le moyen de raccordement (5) est prévu sur le second élément de corps (2).

6. Système de montage selon une quelconque revendication précédente, dans lequel l'agencement de verrouillage comprend un agencement de verrouillage libérable ; et/ou
dans lequel l'agencement de verrouillage comprend un élément de verrouillage (11) qui est sollicité jusqu'à une position de verrouillage croisant un alésage de réception (5) comprenant le moyen de raccordement.

7. Système de montage selon une quelconque revendication précédente, dans lequel l'agencement de verrouillage comprend un élément de verrouillage (11) comportant une poignée actionnable (15).

8. Système de montage selon une quelconque revendication précédente, dans lequel le moyen de fixation comprend un ou plusieurs alésages de fixation (8) à travers le premier élément de corps (3) permettant à des fixations mécaniques d'être utilisées pour raccorder l'élément de corps (3) au meuble.

9. Système de montage selon la revendication 8, dans lequel, dans la configuration assemblée, le second élément de corps (2) masque le ou les alésage (s) (8) à une extrémité.

10. Système de montage selon une quelconque revendication précédente, dans lequel les premier (3) et second (2) éléments de corps sont pourvus de formations d'entrée en prise complémentaires (6, 7) permettant l'assemblage dans la configuration assemblée.

11. Système de montage selon la revendication 10, dans lequel les formations d'entrée en prise (6, 7) permettent aux éléments de corps (2, 3) d'entrer en prise de façon coulissante l'un avec l'autre jusqu'à la configuration assemblée.

12. Système de montage selon la revendication 3, comprenant en outre un élément d'accessoire (4) comportant une partie de tige (29) destinée à être reçue dans l'alésage (5) et un élément d'arrêt ou de butée (9) pour prendre appui contre l'élément de corps lorsque la tige (29) est insérée dans l'alésage (5) jusqu'à un point maximum.
